# EUROPEAN PATENT APPLICATION

(11) **EP 1 850 095 A2**
(43) Date of publication of application: **31.10.2007**
(21) Application number: 07008316.7
(22) Date of filing: 24.04.2007
(51) Int. Cl.: G01D 11/24

(54) **Sensor device**

(30) Priority: 26.04.2006 JP 2006121547
(71) Applicant: ALPS ELECTRIC CO., LTD., Tokyo 145-8501 (JP)
(72) Inventor: Ishihara, Kanji, Tokyo 145-8501 (JP)
(74) Representative: Klunker . Schmitt-Nilson . Hirsch

(57) **Abstract**

A sensor device includes a drive shaft (13) supported in a case (100) (a lid (103)) of the device, a shielding member (Y-ring (111)) elastically in contact with the drive shaft (13) and shielding the inside of the case (100), and a shielding member accommodating portion (112) preventing the shielding member (Y-ring (111)) from being removed from the case (100). The shielding member accommodating portion (112) deforms a portion around a cutout (112d) formed at a predetermined position of the case (100) and thereby retains the shielding member (Y-ring (111)) in the case (100).

## Description

### BACKGROUND OF THE INVENTION

### 1. Field of the Invention

The present invention relates to a sensor device, and more specifically, it relates to a sensor device used in an exhaust gas recirculation (EGR) system installed in automobiles.

### 2. Description of the Related Art

Sensor devices, such as an EGR sensor used in an automotive engine control system, are provided with a shielding member that prevents a foreign substance, such as dust, from entering the inside of the device. A sensor device in which such a shielding member is prevented from being removed even under a harsh environment is proposed (see, for example, Japanese Patent No. 3621268).

In the sensor device described in Japanese Patent No. 3621268, for example, recesses are formed in the inner wall of the case, and the periphery of an elastic shielding member is fitted into the recesses, and thereby the shielding member is surely prevented from being removed.

However, in the above-described conventional sensor device, it is necessary to fit the periphery of the shielding member into the inner wall formed in the case, and therefore fitting the shielding member takes many man-hours.

### SUMMARY OF THE INVENTION

The present invention is made to solve such a problem. An object of the present invention is to provide a sensor device in which a shielding member that shields the inside of the device can be easily fitted, and the shielding member can be surely prevented from being removed.

In an aspect of the present invention, a sensor device includes a drive shaft supported in a case of the device, a shielding member elastically in contact with the drive shaft and shielding the inside of the case, and a removal preventing means preventing the shielding member from being removed from the case. The removal preventing means deforms a portion around a cutout formed at a predetermined position of the case and thereby retains the shielding member in the case.

According to this configuration, a portion around a cutout formed at a predetermined position of the case is deformed, and thereby the shielding member is retained in the case. It is not necessary to form recesses in the inner wall of the case and to fit the periphery of the shielding member into the recesses. Therefore, the shielding member can be easily fitted, and the shielding member can be surely prevented from being removed. In particular, since a portion around a cutout formed at a predetermined position of the case is deformed and thereby the shielding member is retained in the case, the case can be deformed using the cutout as a standard, and therefore the shielding member can be more easily fitted.

In the sensor device, it is preferable that the removal preventing means deform portions of the case disposed between a plurality of cutouts formed at predetermined positions of the case. In this case, the portions of the case disposed between the plurality of cutouts can be easily deformed, and therefore the shielding member can be much more easily fitted.

In particular, in the sensor device, it is preferable that the removal preventing means deform the portions of the case disposed between the plurality of cutouts by thermal caulking. In this case, the cost of deforming the portions of the case disposed between the plurality of cutouts can be reduced, and the shielding member can be easily fitted.

In addition, in the sensor device, it is preferable that the cutout be formed up to a position slightly on the outer side of the outer end of the shielding member. In this case, it is possible to deform a portion of the case disposed on the outer side of the end of the shielding member, and therefore the shielding member can be fitted to the case without being deformed.

For example, in the sensor device, the shielding member is preferably a Y-ring. In this case, it is possible to appropriately shield the inside of the case in a sealed space.

### BRIEF DESCRIPTION OF THE DRAWINGS

Fig. 1 is an exploded perspective view of an EGR sensor to which the sensor device according to an embodiment is applied;
Fig. 2 is a perspective view of the EGR sensor according to the embodiment;
Fig. 3 is a perspective view of the EGR sensor according to the embodiment viewed from the bottom of Fig. 1;
Fig. 4 is a sectional view of the sensor unit of the EGR sensor according to the embodiment;
Fig. 5 is a sectional view for illustrating the configuration of a Y-ring fitted to a lid, and its vicinity according to the embodiment;
Fig. 6 is an enlarged sectional view of the Y-ring fitted to the lid, and its vicinity according to the embodiment; and
Fig. 7 is an enlarged sectional view of the Y-ring fitted to the lid, and its vicinity according to the embodiment.

### DESCRIPTION OF THE PREFERRED EMBODIMENTS

An embodiment of the present invention will now be described in detail with reference to the accompanying drawings. In the following description, the sensor device according to the present invention is applied to an EGR sensor that detects the position of an EGR valve. However, the sensor device according to the present invention is not limited to this but can be applied to the detection of the positions of other objects.

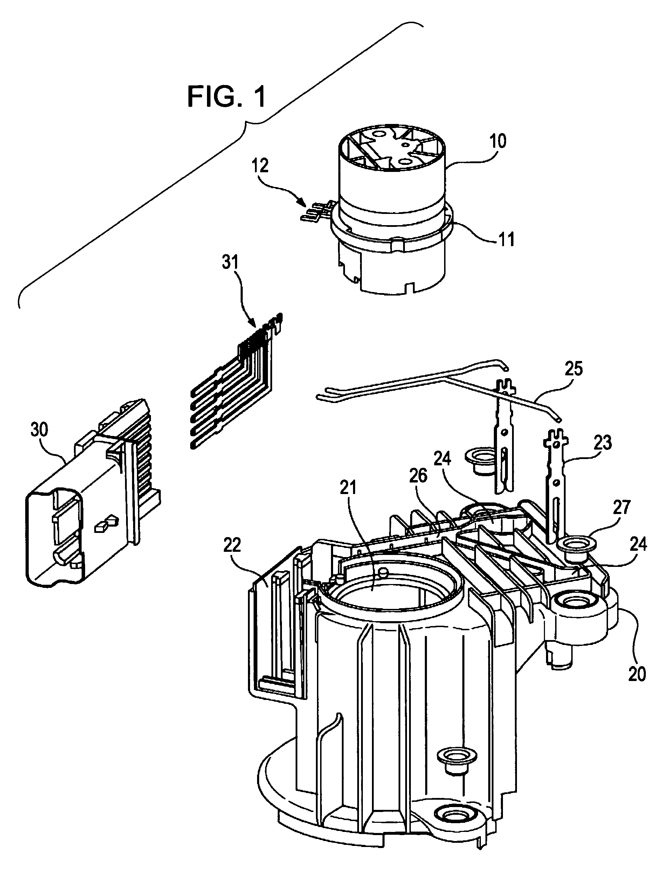

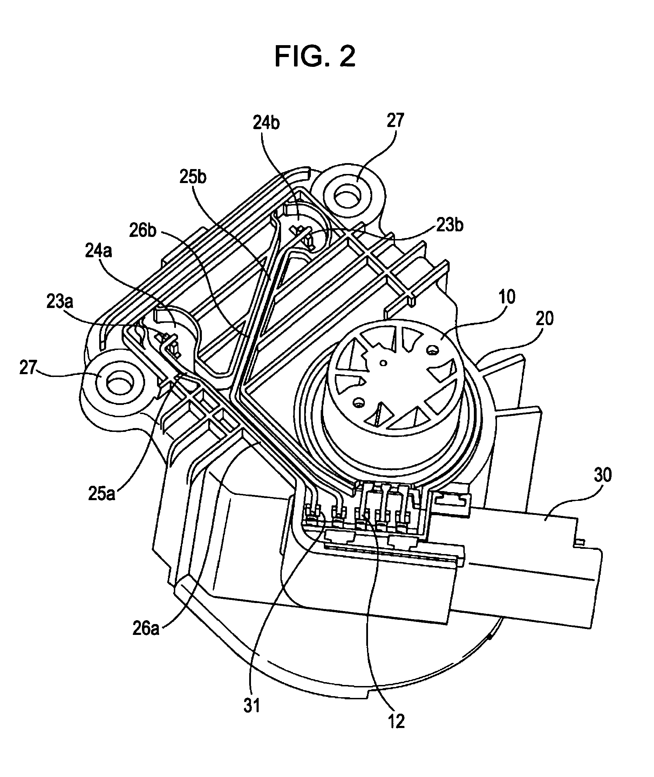

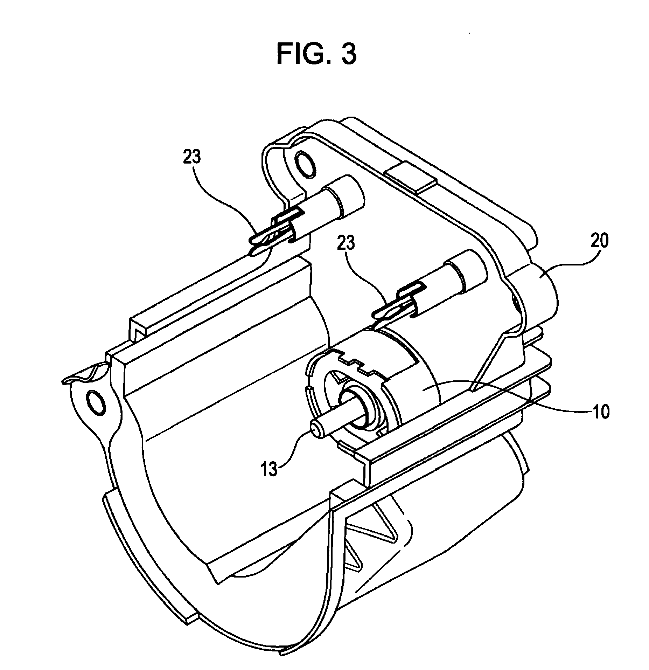

Fig. 1 is an exploded perspective view of an EGR sensor to which the sensor device according to this embodiment is applied. Fig. 2 is a perspective view of the EGR sensor according to this embodiment. Fig. 3 is a perspective view of the EGR sensor according to this embodiment viewed from the bottom of Fig. 1.

The EGR sensor according to this embodiment detects the position of an EGR valve whose position is controlled by a drive motor. The position of the EGR valve is controlled by a control device that performs various controls in an automobile. This control device controls the position of the EGR valve in accordance with the running condition, and receives a feedback signal from the EGR sensor and adjusts the position of the EGR valve.

As shown in Fig. 1, the EGR sensor according to this embodiment includes a sensor unit 10, a cover unit 20, and a connector unit 30. The sensor unit 10 detects the position of the EGR valve and outputs an electrical signal according to the position of the EGR valve to the control device. The cover unit 20 holds the sensor unit 10 and the connector unit 30. The connector unit 30 connects the EGR sensor and the control device.

As shown in Fig. 1, the sensor unit 10 has a cylindrical shape, and has a locking portion 11 roughly in the middle of its outer peripheral portion. The locking portion 11 is to be in contact with an end of a hereinafter described sensor accommodating portion 21. The cylindrical portion disposed below this locking portion 11 is accommodated in the cover unit 20. In the vicinity of this locking portion 11 is provided a terminal (hereinafter referred to as "sensor terminal") 12 that outputs an electrical signal according to the position of the EGR valve detected by the sensor unit 10.

The cover unit 20 includes a sensor accommodating portion 21 accommodating the sensor unit 10, and a connector accommodating portion 22 accommodating the connector unit 30. The cover unit 20 further includes terminal slots 24 and grooves 26. Into the terminal slots 24 are inserted terminals (hereinafter referred to as "motor terminals") 23. The motor terminals 23 output a drive signal from the control device to the drive motor. Into the grooves 26 are fitted terminal connecting members 25 that connect the motor terminals 23 and terminals (hereinafter referred to as "connector terminals") 31 of the connector unit 30. The cover unit 20 is fixed to the case of the engine with screws via collars 27.

As shown in Fig. 2, on the upper aspect of the cover unit 20, into the terminal slot 24a is inserted the motor terminal 23a, and into the terminal slot 24b is inserted the motor terminal 23b. The groove 26a is formed so as to connect the terminal slot 24a and the connector unit 30. The groove 26b is formed so as to connect the terminal slot 24b and the connector unit 30. Into the groove 26a is fitted the terminal connecting member 25a, and the leftmost connector terminal 31 shown in Fig. 2 and the motor terminal 23a are connected. Into the groove 26b is fitted the terminal connecting member 25b, and the second leftmost connector terminal 31 shown in Fig. 2 and the motor terminal 23b are connected.

The connector unit 30 opens at its front end shown in Fig. 1 so as to be able to receive a control-device-side connector. To the connector unit 30 are fitted five connector terminals 31. Via this connector unit 30, an electrical signal from the sensor unit 10 is output to the control device, and a drive signal from the control device is output to the drive motor.

In the EGR sensor according to this embodiment, as shown in Fig. 3, the cover unit 20 is formed so as to accommodate the EGR valve, the drive motor, and so forth. The motor terminals 23 exposed downward from the cover unit 20 are to be connected to the drive motor. In the sensor unit 10 exposed downward from the cover unit 20, a drive shaft 13 that moves in accordance with the position of the EGR valve protrudes. This drive shaft 13 moves in accordance with the position of the EGR valve, and thereby an electrical signal according to the position of the EGR valve is output to the control device.

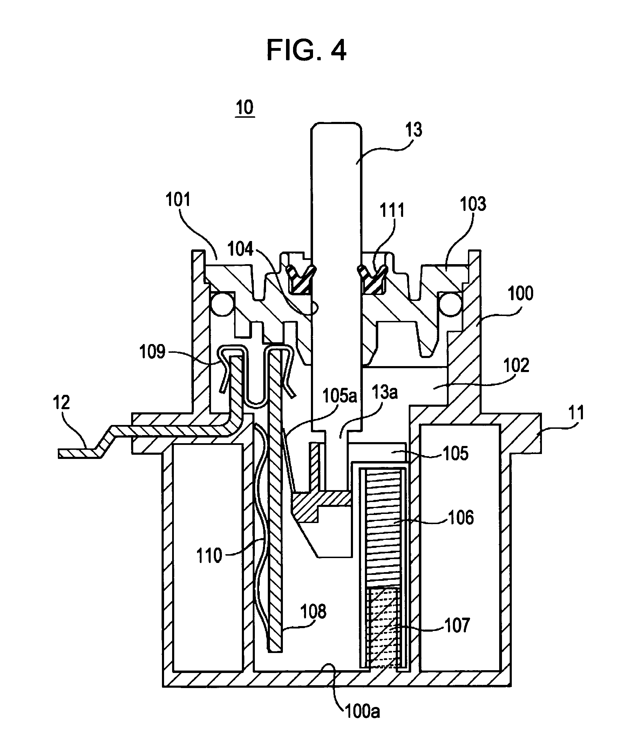

Fig. 4 is a sectional view of the sensor unit 10 of the EGR sensor according to this embodiment. For convenience of explanation, Fig. 4 shows the sensor unit 10 with the tip of the drive shaft 13 directed upward.

As shown in Fig. 4, the case 100 of the sensor unit 10 has an opening 101 formed at the top. Inside the opening 101 is formed a hollow 102. This hollow 102 is closed with a lid 103. In the center of the lid 103 is formed a through hole 104 through which the drive shaft 13 passes. The drive shaft 13 is capable of moving in a straight line in the vertical direction through the through hole 104.

At the end of the drive shaft 13 in the sensor unit 10 is formed a small diameter portion 13a. At the tip of this small diameter portion 13a is disposed a movable member 105. In the vicinity of the movable member 105 is disposed a coil spring 106. The coil spring 106 is guided by a locking piece 107 formed on the bottom 100a of the case 100. At the upper end of the coil spring 106 is disposed the movable member 105. The movable member 105 is pressed up by the urging force of the coil spring 106.

In the hollow 102 and in the vicinity of the movable member 105 is disposed a resistor board 108. The upper end of the resistor board 108 is held, together with the upper end of the sensor terminal 12 disposed in the sensor unit 10, by a holding member 109. Between the resistor board 108 and the inner wall of the case 100 is disposed a leaf spring 110. Urged by the leaf spring 110 toward the movable member 105 and held by the rib of the lid 103, the resistor board 108 is fixed in a given position.

The movable member 105 has a slider 105a. The tip of the slider 105a slides on the resistor board 108. When the drive shaft 13 moves in accordance with the position of the EGR valve, the movable member 105 moves in accordance with this. In the sensor unit 10, the electrical resistance changes in accordance with the position of the slider 105a due to the movement of the movable member 105, and thereby an electrical signal according to the position of the EGR valve is output from the sensor terminal 12.

In the sensor unit 10, a shielding member is disposed in the vicinity of the opening 101 to prevent a foreign substance such as dust or exhaust gas from entering the sensor unit 10. Specifically, a Y-ring 111 formed of an elastic material is disposed in the vicinity of the drive shaft 13 in the lid 103. This Y-ring 111 prevents a foreign substance such as dust from entering the end of the through hole 104. The shielding member is a Y-ring 111 in this embodiment, but is not limited to this.

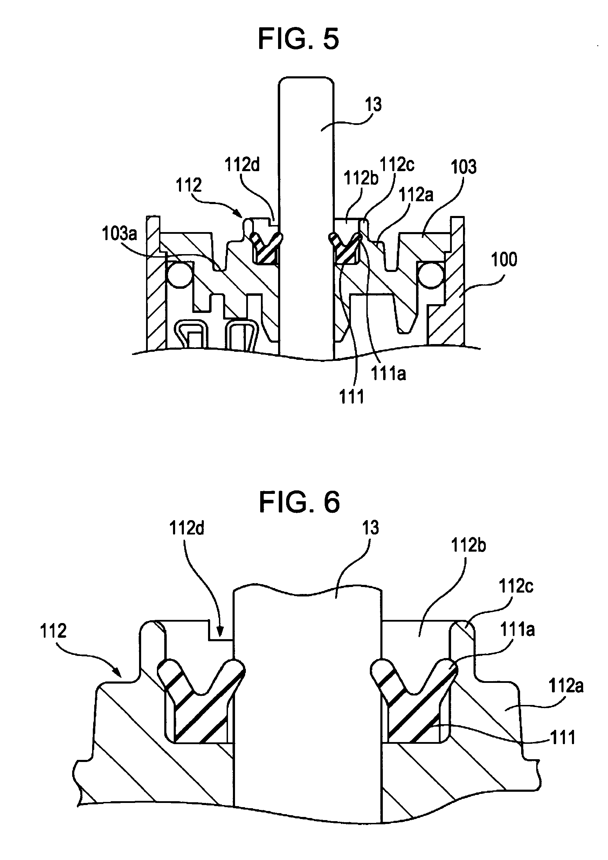

The configuration of the Y-ring 111 fitted to the lid 103, and its vicinity will be described. Fig. 5 is a sectional view for illustrating the configuration of the Y-ring 111 disposed in the lid 103, and its vicinity according to this embodiment. The Y-ring 111 shown in Fig. 5 is not yet fixed to the lid 103.

As shown in Fig. 5, in the vicinity of the through hole 104 in the lid 103 is provided a shielding member accommodating portion 112 that serves as a removal preventing means accommodating the Y-ring 111 and preventing the removal thereof. The shielding member accommodating portion 112 has a disk portion 112a, a depression portion 112b, and a wall portion 112c. The disk portion 112a is formed so as to protrude upward from the bottom 103a of the lid 103. The depression portion 112b is the inner portion of the disk portion 112a and is formed around the through hole 104. The wall portion 112c is formed upward along the inner wall of the depression portion 112b.

The Y-ring 111 is accommodated in the depression portion 112b with its arm portions 111a up. When the drive shaft 13 is fitted, as shown in Fig. 5, the inner arm portion 111a is elastically in contact with the drive shaft 13, and the outer arm portion 111a is elastically in contact with the inner wall of the disk portion 112a or that of the wall portion 112c, thereby preventing a foreign substance from entering through the through hole 104.

Accommodating the Y-ring 111, the wall portion 112c extends up to a position higher than the upper end of the Y-ring 111. In addition, at the upper end of the wall portion 112c are formed a plurality of cutouts 112d. In particular, in this embodiment, at the upper end of the wall portion 112c are formed three cutouts 112d at regular intervals. As described hereinafter, these cutouts 112d are provided for appropriately deforming the upper end of the wall portion 112c when the Y-ring 111 is fitted to the lid 103.

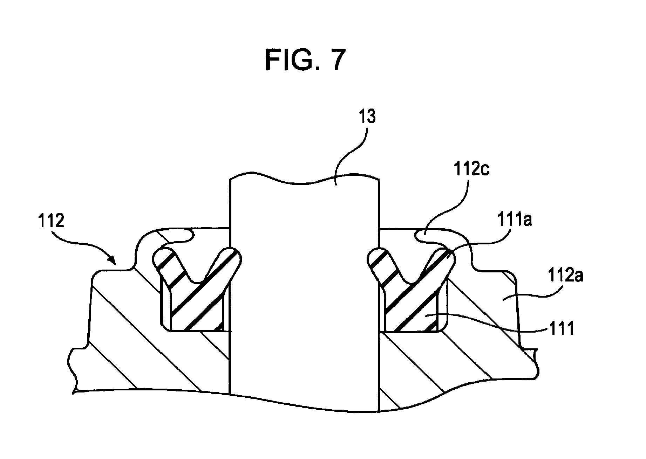

How the Y-ring 111 is fixed to the lid 103 in this embodiment will be described. Figs. 6 and 7 are enlarged sectional views of the Y-ring 111 fitted to the lid 103, and its vicinity according to this embodiment. The Y-ring 111 shown in Fig. 6 is not yet fixed to the lid 103. The Y-ring 111 shown in Fig. 7 is fixed to the lid 103.

As shown in Fig. 6, in this embodiment, the cutouts 112d are formed so that the lower ends of the cutouts 112d are disposed slightly above the upper end of the Y-ring 111, in order to make it easy to deform only the upper ends of the parts of the wall portion 112c disposed between the cutouts 112d.

In this embodiment, the upper end of the wall portion 112c having such cutouts 112d is deformed, for example, by thermal caulking so as to fix the Y-ring 111 to the lid 103. Specifically, the upper ends of the parts of the wall portion 112c disposed between the cutouts 112d are deformed by thermal caulking so as to be bent toward the drive shaft 103. For example, the upper ends of the parts of the wall portion 112c disposed between the cutouts 112d are bent substantially perpendicularly to the drive shaft 13 as shown in Fig. 7. Thus, the Y-ring 111 is prevented from being removed from the lid 103.

As described above, in the sensor device according to this embodiment, portions around the cutouts 112d formed at predetermined positions of the wall portion 112c of the shielding member accommodating portion 112 are deformed, and thereby the shielding member (Y-ring 111) is retained in the shielding member accommodating portion 112. Unlike the conventional art, it is not necessary to form recesses in the inner wall of the case and to fit the periphery of the shielding member into the recesses. Therefore, the Y-ring 111 can be easily fitted, and the Y-ring 111 can be surely prevented from being removed.

In particular, since portions around the cutouts 112d formed at predetermined positions of the wall portion 112c of the shielding member accommodating portion 112 are deformed and thereby the Y-ring 111 is retained in the shielding member accommodating portion 112, the wall portion 112c can be deformed using the cutouts 112d as standards, and therefore the Y-ring 111 can be more easily fitted.

In the sensor device according to this embodiment, the upper ends of the parts of the wall portion 112c disposed between the plurality of cutouts 112d formed in the wall portion 112c of the shielding member accommodating portion 112 are deformed. Thus, the upper ends of the parts of the wall portion 112c disposed between the plurality of cutouts 112d can be easily deformed, and therefore the Y-ring 111 can be much more easily fitted.

In addition, in the sensor device according to this embodiment, the cutouts 112d are formed up to positions slightly above the upper end of the Y-ring 111 shown in Fig. 6. Thus, it is possible to easily deform the upper ends of the parts of the wall portion 112c disposed above the upper end of the Y-ring 111, and therefore the Y-ring 111 can be fitted to the lid 103 without being deformed.

In the sensor device according to this embodiment, the upper ends of the parts of the wall portion 112c disposed between the plurality of cutouts 112d are deformed by thermal caulking. Deforming the upper end of the wall portion 112c by thermal caulking makes it possible to reduce the cost of deforming the wall portion 112c and to easily fit the Y-ring 111.

The present invention is not limited to the above-described embodiment, and various changes may be made therein. In the above-described embodiment, the sizes, shapes, and so forth shown in the accompanying drawings are illustrative only and can be changed as long as the advantages of the present invention are achieved and without departing from the scope of the object of the present invention.

For example, although a plurality of cutouts 112d are formed in the wall portion 112c in the above-described embodiment, the number of the cutouts 112d is not limited to plural. If the upper end of the wall portion 112c can be appropriately deformed, only a single cutout 112d may be formed.

In the above-described embodiment, a lid 103 is fitted to the case 100 of the sensor unit 10. However, the present invention is not limited to this. A case 100 having a shape including the lid 103 may be prepared in advance. Also in this case, as in the above-described embodiment, a Y-ring 111 shielding the inside of the case 100 can be easily fitted to the case 100, and the Y-ring 111 can be surely prevented from being removed.

## Claims

1. A sensor device comprising:
a drive shaft supported in a case of the device;
a shielding member elastically in contact with the drive shaft and shielding the inside of the case; and
a removal preventing means preventing the shielding member from being removed from the case,
wherein the removal preventing means deforms a portion around a cutout formed at a predetermined position of the case and thereby retains the shielding member in the case.

2. The sensor device according to Claim 1, wherein the removal preventing means deforms portions of the case disposed between a plurality of cutouts formed at predetermined positions of the case.

3. The sensor device according to Claim 2, wherein the removal preventing means deforms the portions of the case disposed between the plurality of cutouts by thermal caulking.

4. The sensor device according to any one of Claims 1 to 3, wherein the cutout is formed up to a position slightly on the outer side of the outer end of the shielding member.

5. The sensor device according to any one of Claims 1 to 4, wherein the shielding member is a Y-ring.
